Europäisches Patentamt

European Patent Office

Office européen des brevets

(11) Veröffentlichungsnummer: **0 014 257**
**B1**

(12) EUROPÄISCHE PATENTSCHRIFT

(45) Veröffentlichungstag der Patentschrift:
**19.10.83**

(51) Int. Cl.³: **F 16 L 55/02**

(21) Anmeldenummer: **79105282.2**

(22) Anmeldetag: **20.12.79**

(54) **Flüssigkeitsschalldämpfer.**

(30) Priorität: **26.01.79 DE 2902995**

(43) Veröffentlichungstag der Anmeldung:
**20.08.80 Patentblatt 80/17**

(45) Bekanntmachung des Hinweises auf die Patenterteilung:
**19.10.83 Patentblatt 83/42**

(84) Benannte Vertragsstaaten:
**BE DE FR GB SE**

(56) Entgegenhaltungen:
**FR-A-1 256 568**
**FR-A-1 355 652**
**FR-A-2 038 950**
**FR-A-2 212 854**
**US-A-2 739 661**
**US-A-3 838 749**

(73) Patentinhaber: **Sperry Vickers Zweigniederlassung der Sperry GmbH, Postfach 2327, D-6380 Bad Homburg v.d.H. (DE)**

(72) Erfinder: **Krüger, Heinz, An den Tannen 9, D-6391 Wilhelmsdorf (DE)**
Erfinder: **Wimmer, Walter, Paul-Dudenstrasse 100, D-6239 Kriftel (DE)**

(74) Vertreter: **Zwirner, Gottfried, Dipl.-Ing. Dipl.-W.-Ing. et al, BLUMBACH-WESER-BERGEN-KRAMER-ZWIRNER Patentanwälte Sonnenberger Strasse 43, D-6200 Wiesbaden 1 (DE)**

Flüssigkeitsschalldämpfer

Die Erfindung bezieht sich auf einen Flüssigkeitsschalldämpfer mit den Merkmalen, a) bis c) des Oberbegriffs des Anspruches 1.

Derartige Maßnahmen sind bei Schalldämpfern an sich bekannt (FR-A-2 038 950). Dabei sind Einbauten in den Zuleitungen und Ableitungen vorgesehen, mit deren Hilfe eine schwache Dämpfung für Strömungsmittel erzielt werden soll. Die Einbauten bestehen aus Winkelprofilen, deren Kante in Strömungsrichtung und deren offene Seite entgegen der Strömungsrichtung angeordnet sind. Ein so ausgebildeter Schalldämpfer ist für Flüssigkeiten wenig geeignet.

Bei den Bemühungen um Lärmminderung in Hydrosystemen sind sogenannte Reflexionsschalldämpfer bekanntgeworden (Ölhydraulik und Pneumatik, 20 (1976) Nr. 8, S. 515). Diese bestehen aus einer Ausdehnungskammer im Verlauf des Hydraulikstromes, der axial zu- und abgeführt wird. Das Dämpfungsverhalten dieser Ausdehnungskammern ist bescheiden, weswegen man dazu übergegangen ist, Einbauten vorzusehen, welche das Dämpfungsverhalten verbessern sollen.

Der Erfindung liegt die Aufgabe zugrunde, einen Flüssigkeitsschalldämpfer zu schaffen, der ein gutes Dämpfungsverhalten im interessierenden Bereich von beispielsweise 1500 bis 10 000 Hz aufweist, ohne kompliziert aufgebaut und damit störanfällig zu sein.

Die gestellte Aufgabe wird durch die Lehre des Anspruchs 1 gelöst. Überraschenderweise wird durch die Maßnahme, daß die Zuleitung — ohne Einbauten — quer zur Längserstreckung der Kammer angeordnet ist, bereits eine sehr viel bessere Dämpfung der Druckpulsation in der Hydraulikflüssigkeit erreicht, als dies bei bisher bekannten Ausdehnungskammern der Fall war. Der volle Erfolg tritt ein, wenn die Entnahmestelle der Ableitung im Bereich eines Schwingungsbauchs der Kammer angeordnet ist.

Infolge der Zuleitung quer zur Längserstreckung der Ausdehnungskammer weist diese mindestens eine ungestörte Querwand auf, welche die Ausbildung einer stehenden Welle begünstigt. Die andere Querwand der Ausdehnungskammer kann durch die Ableitung der Hydraulikflüssigkeit unterbrochen sein, jedoch sollte die Unterbrechungsquerschnittsfläche einiges kleiner sein als die Restfläche der Querwand. Zwischen den beiden Querwänden bildet sich eine stehende Welle aus, deren Schwingungsbauch für die Grundschwingung in der Mitte der Kammer liegt, wo demgemäß die Ausschläge am höchsten und die Druckschwankungen am geringsten sind. Die Hydraulikflüssigkeit wird an dieser Stelle entnommen, wobei sich das Entnahmerohr entweder in axialer Richtung der Ausdehnungskammer bis zu deren Mitte erstreckt oder quer im mittleren Bereich der Ausdehnungskammer angeordnet ist. Im letzteren Fall sind die Zuleitung und die Ableitung der Hydraulikflüssigkeit versetzt zueinander an der Ausdehnungskammer angeordnet.

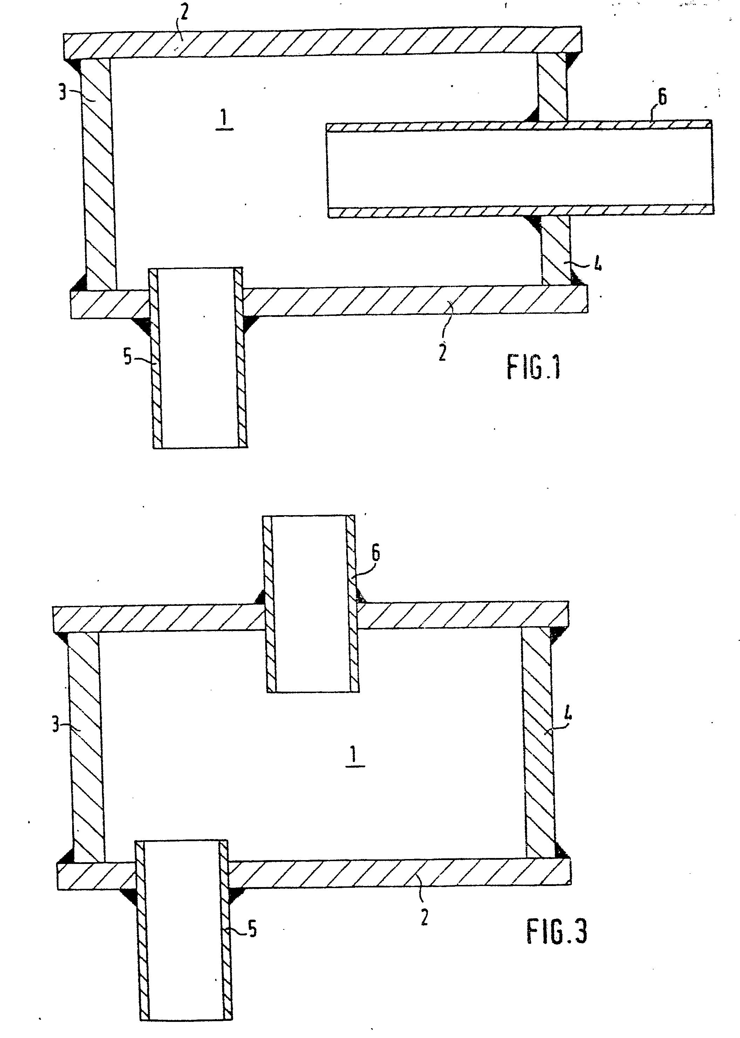

Ein Ausführungsbeispiel der Erfindung wird anhand der Zeichnung erläutert. Dabei zeigt Fig. 1 ein erstes Ausführungsbeispiel des Flüssigkeitsschalldämpfers;

Fig. 2 ein zugehöriges Diagramm der Dämpfung und

Fig. 3 ein zweites Ausführungsbeispiel.

In Fig. 1 ist eine längliche Ausdehnungskammer 1 dargestellt, die aus einer rohrförmigen Mantelwand 2 sowie zwei Querwänden 3 und 4 besteht, die miteinander verschweißt sind. In der Nähe der Querwand 3 erstreckt sich ein Zuleitungsrohrstutzen 5 durch die Mantelwand 2 hindurch, und ein Ableitungsstutzen 6 durchdringt die Querwand 4 und erstreckt sich in axialer Richtung der Kammer bis zu deren Mitte. Die Abmessungen der Ausdehnungskammer 1 hängen von dem gewünschten Dämpfungsbereich gemäß nachstehender Formel ab:

$$f_n = \frac{n}{2\,L}\;\sqrt{\frac{1}{\rho_{\ddot{o}l}\cdot\beta_{\ddot{o}l}}}\;.$$

Dabei bedeutet L die axiale Länge der Ausdehnungskammer,

$\rho_{\ddot{o}l}$ die Dichte der Hydraulikflüssigkeit,

$\beta_{\ddot{o}l}$ der Kompressibilitätsmodul der Hydraulikflüssigkeit und

$\eta = 1$ (Grundfrequenz), 2 (erste Harmonische), 3 (zweite Harmonische) etc.

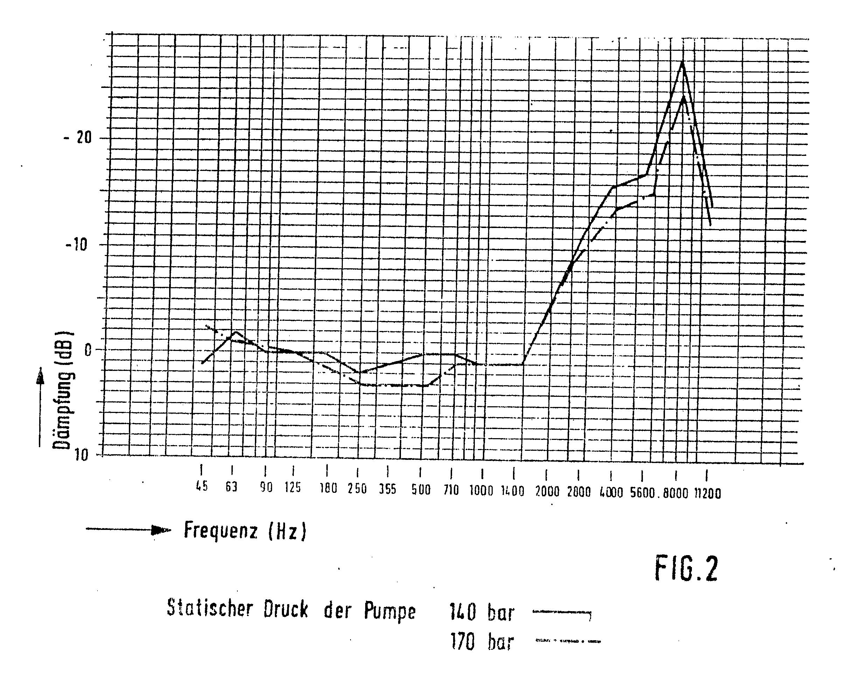

Für die dargestellte axiale Länge der Ausdehnungskammer von 100 mm ergibt sich eine Dämpfungskurve, die bei etwa 1500 Hz beginnt, bei 8000 Hz das Maximum hat und dann bei 12 000 wieder gegen Null geht, wie in Fig. 2 dargestellt. Wenn ein breiter Dämpfungsbereich benötigt wird, werden zwei Flüssigkeitsschalldämpfer 1 hintereinandergeschaltet, die auf unterschiedliche Dämpfungsbereiche ausgelegt sind. Prinzipiell können mehrere Flüssigkeitsschalldämpfer hintereinander angeordnet werden, wenn eine entsprechende Güte der Pulsationsdämpfung benötigt wird.

Anstelle der Anordnung von Zuleitung 5 und Ableitung 6 im rechten Winkel zueinander ist es auch möglich, diese versetzt zueinander anzuordnen, wie es die Fig. 3 zeigt. In diesem Falle sind die Querwände 3 und 4 ungestört, und die stehende Welle kann sich besonders gut ausbilden. Die Entnahme erfolgt wiederum an der Stelle eines Schwingungsbauches, d. h. in der Mitte der Ausdehnungskammer. Die Ausbildung nach Fig. 3 ist besonders für die Hintereinanderschaltung mehrerer Ausdehnungskammern geeignet.

Der Durchmesser der Ausdehnungskammer nach Fig. 1 und 3 ist nicht kritisch, beispielsweise haben sich Durchmesser von 30 mm und 50 mm als brauchbar herausgestellt. Wenn die Querwand 4 durchbrochen ist (Fig. 1), ist das größere Maß günstiger, da dann noch ausreichend Wandfläche vorhanden ist, damit sich eine stehende Welle ausbilden kann. Im Ausführungsbeispiel nach Fig. 3 ist die Querwand 4 nicht unterbrochen, und deshalb genügt der kleinere Durchmesser.

## Patentansprüche

1. Flüssigkeitsschalldämpfer mit folgenden Merkmalen:

a) eine längliche Kammer (1) weist eine Mantelwand (2) und zwei zu diesen senkrechte Querwände (3, 4) auf, so daß sich eine stehende Welle mit Schwingungsknoten an den Querwänden und dazwischenliegendem Schwingungsbauch ausbilden kann;

b) quer zur Längserstreckung der Kammer (1) führt eine Zuleitung (5) in diese hinein und

c) eine Ableitung (6) von dieser weg;

dadurch gekennzeichnet, daß

d) die Entnahmestelle der Ableitung (6) im Bereich des Schwingungsbauches für die Grundschwingung der stehenden Welle angeordnet ist, die sich zwischen den beiden Querwänden (3, 4) der Kammer (1) bildet.

2. Flüssigkeitsschalldämpfer nach Anspruch 1 mit einer als Rohrstutzen ausgebildeten Ableitung (6), die in axialer Richtung der Kammer (1) geführt ist, dadurch gekennzeichnet, daß das Ende des Ableitungsrohrstutzens (6) in etwa der Mitte der Kammer (1) angeordnet ist.

3. Flüssigkeitsschalldämpfer nach Anspruch 1 mit einer als Rohrstutzen ausgebildeten Ableitung (6), die in radialer Richtung der Kammer (1) geführt ist, dadurch gekennzeichnet, daß die Zuleitung (5) und die Ableitung (6) versetzt zueinander angeordnet sind und daß der Ableitungsrohrstutzen (6) mittig zwischen den glatten Querwänden (3, 4) mündet.

4. Flüssigkeitsschalldämpfer nach einem der Ansprüche 1 bis 3, dadurch gekennzeichnet, daß die Länge der Kammer (1) zwischen 80 und 130 mm beträgt.

5. Flüssigkeitsschalldämpfer nach einem der Ansprüche 1 bis 4, dadurch gekennzeichnet, daß die Querabmessung der Kammer (1) im Bereich von 30 bis 50 mm liegt.

6. Flüssigkeitsschalldämpfer nach einem der Ansprüche 1 bis 5, dadurch gekennzeichnet, daß zwei oder mehrere Kammern (1) hintereinander angeordnet sind, die auf unterschiedliche Dämpfungsbereiche ausgelegt sind.

## Claims

1. Silencer for fluids comprising the following features:

a) an elongated chamber (1) has a sleeve wall (2) and two diaphragmas (3, 4) extending transversly so that a standing wave having an oscillation node at the diaphragmas and, therebetween, an internode can develop;

b) a supply line (5) leads into the chamber (1) transversly to the longitudinal dimension thereof and

c) a discharge line (6) leads away therefrom;

characterized in that

d) the outlet through the discharge line (6) is arranged in the region of the internode for the dundamental mode of oscillation of the standing wave being built up between the pair of diaphragmas (3, 4) of the chamber (1).

2. Silencer for fluids according to claim 1 wherein the discharge line (6) is formed by a pipe connection extending in axial direction of the chamber (1), characterized in that the one end of the discharge pipe connection (6) is arranged in the center region of the chamber (1).

3. Silencer for fluids according to claim 1 wherein the discharge line (6) is formed by a pipe connection extending in radial direction of the chamber (1) characterized in that the supply line (5) and the discharge line (6) are offset from one another and in that the discharge pipe connection (6) opens in the center between the indisturbed diaphragmas (3, 4).

4. Silencer for fluids according to claims 1 to 3 characterized in that the length of the chamber (1) is between 80 and 130 mm.

5. Silencer for fluids according to claims 1 – 4 characterized in that the transverse dimension of the chamber (1) is in the range between 30 to 50 mm.

6. Silencer for fluids according to claims 1 – 5 characterized in that two or a plurality of chambers (1) are arranged in series and are dimensioned for different attenuation ranges.

## Revendications

1. Amortisseur de bruit ou silencieux pour liquide avec les points remarquables suivants:

a) une chambre (1) de forme allongée comporte une chmise (2) et deux parois transversales (3, 4) perpendiculaires à celle-ci, de sorte qu'il peut se former une onde stationnaire avec des noeuds de vibration aux parois transversales et avec un ventre de vibration situé entre ces noeuds;

b) transversalement au sens longitudinal de la chambre (1), une conduite d'amenée (5) pénètre dans cette chambre, et

c) une conduite d'évacuation (6) s'en éloigne;

caractérisé en ce que

d) l'emplacement de prise de la conduite d'évacuation (6) est disposé dans la zone du ventre de vibration pour la fréquence fondamentale de l'onde stationnaire qui se forme entre les deux parois transversales (3, 4) de la chambre (1).

2. Amortisseur de bruit pour liquide selon la revendication 1, avec une conduite d'évacuation (6) se présentant sous la forme d'une tubulure qui est dirigée dans le sens axial de la chambre (1), caractérisé en ce que l'extrémité de la tubulure d'évacuation (6) est disposée approximativement au milieu de la chambre (1).

3. Amortisseur de bruit pour liquide selon la revendication 1 avec une conduite d'évacuation (6) se présentant sous la forme d'une tubulure qui est dirigée dans le sens radial de la chambre (1), caractérisé en ce que la conduite d'amenée (5) et la conduite d'évacuation (6) sont disposées décalées l'une par rapport à l'autre et en ce que la tubulure d'évacuation (6) débouche au milieu entre les parois transversales (3, 4) lisses.

4. Amortisseur de bruit pour liquide selon une quelconque des revendications 1 à 3, caractérisé en ce que la longueur de la chambre (1) est comprise entre 80 et 130 mm.

5. Amortisseur de bruit pour liquide selon une quelconque des revendications 1 à 4, caractérisé en ce que la dimension transversale de la chambre (1) est comprise entre 30 et 50 mm.

6. Amortisseur de bruit pour liquide selon une quelconque des revendications 1 à 5, caractérisé en ce que sont disposées l'une derrière l'autre deux ou plusieurs chambres (1) qui sont dimensionnées pour différents domaines d'amortissement.

FIG.1

FIG.3

FIG.2

Dämpfung (dB)

Frequenz (Hz)

45  63  90  125  180  250  355  500  710  1000  1400  2000  2800  4000  5600  8000  11200

Statischer Druck der Pumpe    140 bar ⎯⎯⎯⎯⎯

170 bar ⎯ ⋅ ⎯ ⋅ ⎯

0 014 257

7